# EUROPÄISCHE PATENTSCHRIFT

(11) **EP 2 185 340 B1**
(45) Veröffentlichungstag und Bekanntmachung des Hinweises auf die Patenterteilung: **16.03.2016**
(21) Anmeldenummer: 08804898.8
(22) Anmeldetag: 30.09.2008
(51) Int. Cl.: B29C 63/34, B29C 63/46, F16L 55/165, B29K 77/00

(54) **VERWENDUNG EINER POLYAMIDFORMMASSE ZUR AUSKLEIDUNG VON ROHRLEITUNGEN**
USE OF A POLYAMIDE MOLDING COMPOUND FOR LINING CONDUITS
UTILISATION D'UNE MATIÈRE DE MOULAGE POLYAMIDE POUR HABILLER DES CANALISATIONS

(30) Priorität: 17.10.2007 DE 102007050011; 09.05.2008 DE 102008001678
(43) Veröffentlichungstag der Anmeldung: 19.05.2010
(73) Patentinhaber: Evonik Degussa GmbH, 45128 Essen (DE)
(72) Erfinder: DOWE, Andreas, 46325 Borken (DE); TÜLLMANN, Ralf, 45701 Herten (DE); BEUTH, Reinhard, 45772 Marl (DE); BAUMANN, Franz-Erich, 48249 Dülmen (DE)
(86) Internationale Anmeldenummer: PCT/EP2008/063050
(87) Internationale Veröffentlichungsnummer: WO 2009/050031

(56) Entgegenhaltungen:
- EP-A- 0 266 951
- WO-A1-2008/019946
- DE-A1-102006 038 108
- US-A- 3 856 905

## Beschreibung

Die Erfindung betrifft die Verwendung eines Inliners aus einer näher spezifizierten Polyamidformmasse für Rohre, Rohrleitungen oder Kanäle, wobei die Rohrleitungen oder Kanäle dem Transport von Fernwärme, Frischwasser, Abwasser, Öl, Gas oder ähnlichen Medien dienen.

Fernwärme-, Frischwasser-, Abwasser- Öl- oder Gasleitungen oder sonstige Medien transportierende Leitungen oder Kanäle haben eine begrenzte Standzeit. Vor langer Zeit verlegte Leitungen sind daher häufig schadhaft, so dass z. B. Abwässer in das umliegende Grundwasser austreten oder anstehendes Grundwasser in die Abwasserrohre eintreten kann. Der Grund hierfür sind einerseits die fortschreitenden Korrosionsschäden, andererseits die zunehmende mechanische Belastung, wie sie durch Verkehrserschütterungen, Druckbelastung oder Erdbewegungen im Rahmen von Tiefbaumaßnahmen oder in Bergbaugebieten auftreten. Die in Frage kommenden Leitungen bzw. Kanäle liegen rund 1 m tief oder mehr im Erdreich, so dass ein Auswechseln der Leitungen oder Kanäle über die gesamte Länge nur mit erheblichem Aufwand möglich wäre. Es besteht daher ein Bedarf an Sanierungsverfahren, mit denen defekte Leitungen des Ver- und Entsorgungsnetzes kostengünstig saniert werden können.

Darüber hinaus werden die in Frage kommenden Leitungen häufig auch ab Werk mit einem Inliner ausgestattet. Dieser dient u. a. der Vorbeugung gegen Korrosionsschäden. So werden z. B. Leitungen für den Transport von Rohöl schon ab Werk mit einem Inliner versehen und anschließend z. B. auf dem Meeresboden, im Erdreich oder auch überirdisch installiert.

Die im Stand der Technik vorherrschenden Inliner aus Polyethylen besitzen eine Reihe von Nachteilen. So ist beispielsweise ihr Quell- und Diffusionsverhalten schlecht, insbesondere dann, wenn organische Flüssigkeiten, wie Rohöl, Petrochemikalien oder Abwasser, das organische Flüssigkeiten, wie z. B. Lösemittel, enthält, gefördert werden. Das Diffusionsverhalten ist auch bei Gasleitungen nachteilig. Polyethylen ist darüber hinaus spannungsrissempfindlich, z. B. bei Kontakt mit Tensiden sowie kerbempfindlich. Aufgrund des niedrigen Erweichungspunktes und der mangelnden Medienbeständigkeit von Polyethylen sind Inliner aus diesem Material nur bis Betriebstemperaturen von maximal 65 °C einsetzbar.
Seit einiger Zeit werden Inliner aus Polyamid 11 (PA11) im Offshore-Bereich in Stahlrohren eingesetzt, mit denen Rohöl oder Rohgas gefördert wird (J. Mason, Oil & Gas Journal, Oct. 18, 1999, S. 76 - 82). Der Außendurchmesser des Rohrinliners wird dabei etwas größer als der des auszukleidenden Rohres ausgelegt. Um den Inliner einzubringen, wird dieser dann in seinem Querschnitt durch Verstrecken, Stauchen oder Falten reduziert. Nach dem Einbringen des Inliners legt sich dieser durch Rückstellung an die Rohrinnenwandung an. Dieser Vorgang kann durch Druck- und Temperaturbeaufschlagung unterstützt werden. Das so ausgekleidete Rohr weist keinen Ringraum auf. Als Beispiel eines dem Fachmann bekannten Verfahrens sei das Swagelining^{™} und das Rolldown genannt. Der Inliner kann auf diese Weise auch bereits werksseitig eingebracht werden. Inliner aus Polyethylen werden heute standardmäßig durch diese Verfahren in Rohre eingebracht.

In der deutschen Patentanmeldung Nr. 10 2006 038 108.4 oder in der PCT Patentanmeldung WO 2008/019946 ist ein Inliner für eine Rohrleitung, der aus einer Polyamidformmasse besteht, bekannt.

Diese Patentanmeldungen offenbaren ebenfalls ein Verfahren zum Einbringen eines Inliners in eine Rohrleitung, wobei der Außendurchmesser des Inliners größer ist als der Innendurchmesser der Rohrleitung, und wobei der Querschnitt des Inliners durch Einwirken einer äußeren Kraft vor dem Einbringen verringert wird, wobei der Inliner aus einer Polyamidformmasse besteht, die mindestens 50 Gew.-% Polyamid enthält, das ausgewählt ist aus einer Gruppe einschließend PA610, PA612, PA613, PA1010, PA0112, PA1014, PA12, PA1212.

Aufgrund des Rückstellverhaltens der derzeit verfügbaren PA11-Formmassen ist das Einbringen der entsprechenden Inliner insbesondere mittels des Roll-Down Verfahrens nur eingeschränkt realisierbar. Dies ist darin begründet, dass der im Durchmesser gestauchte PA11-Inliner aufgrund des sehr schnellen Rückstellverhaltens der PA11-Formmassen sich beim Einbringen in das Rohr zu schnell an die Rohrinnenwand des auszukleidenden Rohres anlegt und somit ein komplettes Einziehen des Inliners erschwert bzw. verhindert. Abgestellt werden kann dies, indem die entsprechenden Inliner nur in sehr kurze Rohrabschnitte eingebracht werden. Dies ist allerdings als unwirtschaftlich zu betrachten, da der Einsatz kurzer Rohrstücke zu einer erhöhten Anzahl von Verbindungsstellen führt. Die dadurch entstehenden Kosten und zusätzlichen potentiellen Fehlerstellen sind nicht akzeptabel.
Eine weitere Möglichkeit, diese Schwierigkeiten zu umgehen, besteht darin, dass der Inliner so dimensioniert wird, dass er keinen oder nur einen minimalen Anpressdruck nach Rückstellung an die Rohrinnenwand des Hauptrohres aufweist. (Y. Giacomelli & B. Howard, 4th MERL Oilfield Engineering with Polymers Conference 2003, Qualification of Plastic Lined Pipelines For Hydrocarbon Transport). Im Extremfall sieht die Auslegung sogar einen minimalen Ringspalt vor. Dies führt jedoch dazu, dass der Inliner nicht ideal im Rohr fixiert ist und spätere Probleme wie Verwerfungen auftreten können.

Die Aufgabe der vorliegenden Erfindung bestand darin, diese Nachteile zu vermeiden und eine Polyamid-Formmasse für die Herstellung eines Inliners für Rohrleitungen zur Verfügung zu stellen, welcher einerseits die guten Eigenschaften der üblicherweise verwendeten Materialien auf Basis von Polyamid besitzt und der andererseits auch durch Reduzierung des Querschnitts durch Verstrecken, Stauchen oder Falten in ein Rohr eingebracht werden kann, ohne dass die oben beschriebenen Schwierigkeiten auftreten.

Überraschenderweise wurde festgestellt, dass Polyamidformmassen auf Basis eines Polyamids, das kein PA11 ist, sich in ihrem Rückstellverhalten so stark von auf PA11 basierenden Formmassen unterscheiden, dass diese für den Einsatz als oben beschriebene Inliner vorgesehen werden können.

Gegenstand der Erfindung ist demnach ein Verfahren zum Einbringen eines Inliners in ein Rohr oder eine Rohrleitung, wobei der Außendurchmesser des Inliners geringfügig größer ist als der Innendurchmesser des Rohrs bzw. der Rohrleitung, und wobei der Querschnitt des Inliners durch Einwirken einer äußeren Kraft vor dem Einbringen verringert wird, wobei der Inliner aus einer Polyamidformmasse besteht, die mindestens 50 Gew.-%, mindestens 60 Gew.-%, mindestens 70 Gew.-% bzw. mindestens 80 Gew.-% Polyamid enthält, das ausgewählt ist aus der Gruppe PA610, PA612, PA613, PA1010, PA1012, PA1014, PA12, PA1212 sowie daraus basierende Polyetheresteramide und Polyetheramide, wobei der Querschnitt des Inliners um mindestens 3 % reduziert wird und wobei der Außendurchmesser des Inliners maximal 10 % größer ist als der Innendurchmesser des Rohrs beziehungsweise der Rohrleitung.

Unter "Rohr" wird hierbei im engeren Sinne ein transportierbarer Abschnitt verstanden; mehrere solcher Rohre werden zu einer Rohrleitung zusammengefügt.

Wegen des Übermaßes des Inliners gegenüber dem Rohr bzw. der Rohrleitung garantiert die Rückverformung des Inliners nach dem Einzug eine dauerhafte Close-fit-Lage. Der Außendurchmesser des Inliners ist maximal 10 % und bevorzugt maximal 6 % größer als der Innendurchmesser des Rohrs bzw. der Rohrleitung.

Geeignete Verfahren zum Einbringen eines Inliners mit Übermaß in ein Rohr oder eine Rohrleitung sind beispielsweise in folgenden Patentanmeldungen beschrieben: EP-A-0 562 706, EP-A-0 619 451, WO 95/27168, WO 98/02293, WO 01/16520, EP-A-0 377 486, EP-A-0 450 975, EP-A-0 514 142 und WO 96/37725.

Beim Verstrecken, Stauchen oder Falten wird der Querschnitt des Inliners um mindestens 3 %, bevorzugt um mindestens 4 %, besonders bevorzugt um mindestens 5 %, insbesondere bevorzugt um mindestens 6 % und ganz besonders bevorzugt um mindestens 7 % reduziert.

Ein geeignetes Einbringungsverfahren ist beispielsweise das Swagelining™. Nachdem hier Inlinerrohre zu einer Sektion stumpfverschweißt wurden, die etwas länger ist als der zu sanierende Abschnitt des Trägerrohrs, wird diese durch ein Gesenk gezogen, das den Rohrdurchmesser zeitweilig reduziert. Dadurch kann der Inliner in den kleineren Rohrinnenraum des Trägerrohrs eingezogen werden. Nachdem der Inliner vollständig in das Trägerrohr eingezogen worden ist, wird die Zugkraft entlastet. Dadurch bemüht sich der Inliner, wieder zu seinem Ausgangsdurchmesser zurückzukehren, bis er fest an der Innenwand des Trägerrohrs anliegt. Durch den fest anliegenden Inliner kommt die Durchflusskapazität der sanierten Rohrleitung der ursprünglichen sehr nahe.

Ein weiteres geeignetes Einbringungsverfahren ist das Rolldown^{®}-Verfahren. Auch hier werden zunächst Inlinerrohre vor Ort im Stumpfschweißverfahren verbunden. Um einen Einzug zu ermöglichen, wird der Querschnitt des Inliners in der Rolldown-Maschine mit Hilfe paarweise angeordneter Rollen verringert. Die Geschwindigkeit der Verformung beträgt typischerweise ein bis drei Meter pro Minute. Nach dem Einzug können die Rohrenden verschlossen und der Inliner mit Wasserdruck beaufschlagt werden. Dadurch kann die Rückstellung auf seinen ursprünglichen Durchmesser zusätzlich unterstützt werden und der Inliner legt sich dicht an die Rohrinnenwand an. Gegenüber dem Swagelining sind hier beim Einziehen des Inliners geringere Zugkräfte erforderlich, was zu einer geringeren Materialbelastung führt und höhere Einzugsgeschwindigkeiten ermöglicht.

Das Falten ist beispielsweise in der EP-A-0 377 486 beschrieben.

Das Polyamid kann verzweigend wirkende Bausteine enthalten, die beispielsweise von Tricarbonsäuren, Triaminen oder Polyethylenimin abgeleitet sind.

Das Polyamid kann auch ein Polyetheresteramid oder ein Polyetheramid sein. Polyetheresteramide sind z. B. aus der DE-A-25 23 991 und der DE-A-27 12 987 bekannt; sie enthalten als Comonomer ein Polyetherdiol. Polyetheramide sind beispielsweise aus der DE-A- 30 06 961 bekannt; sie enthalten als Comonomer ein Polyetherdiamin.

Beim Polyetherdiol bzw. dem Polyetherdiamin kann die Polyethereinheit beispielsweise auf 1.2-Ethandiol, 1.2-Propandiol, 1.3-Propandiol, 1.4-Butandiol oder 1.3-Butandiol basieren. Die Polyethereinheit kann auch gemischt aufgebaut sein, etwa mit statistischer oder blockweiser Verteilung der von den Diolen herrührenden Einheiten. Das Gewichtsmittel der Molmasse der Polyetherdiole bzw. Polyetherdiamine liegt bei 200 bis 5000 g/mol und vorzugsweise bei 400 bis 3000 g/mol; ihr Anteil am Polyetheresteramid bzw. Polyetheramid beträgt bevorzugt 4 bis 60 Gew.-% und besonders bevorzugt 10 bis 50 Gew.-%. Geeignete Polyetherdiamine sind durch Konversion der entsprechenden Polyetherdiole durch reduktive Aminierung oder Kupplung an Acrylnitril mit nachfolgender Hydrierung zugänglich; sie sind z. B. in Form der JEFFAMIN^{®} D-Typen bei der Huntsman Corp. oder in Form der Polyetheramin D-Reihe bei der BASF SE kommerziell erhältlich.

Ebenso können auch Mischungen verschiedener Polyamide, ausreichende Verträglichkeit vorausgesetzt, verwendet werden. Verträgliche Polyamidkombinationen sind dem Fachmann bekannt; beispielsweise seien hier die Kombination PA12/PA1012, PA12/PA1212, PA612/PA12, PA613/PA12, PA1014/PA12 und PA610/PA12 aufgeführt. Im Zweifelsfall können verträgliche Kombinationen durch Routineversuche ermittelt werden.

In einer bevorzugten Ausführungsform der Erfindung wird eine Mischung aus 30 bis 99 Gew.-%, bevorzugt 40 bis 98 Gew.-% und besonders bevorzugt 50 bis 96 Gew.-% Polyamid im engeren Sinne sowie 1 bis 70 Gew.-%, bevorzugt 2 bis 60 Gew.-% und besonders bevorzugt 4 bis 50 Gew.-% Polyetheresteramid und/oder Polyetheramid eingesetzt. Die Verwendung von Polyetheramiden ist hierbei wegen der besseren Hydrolysestabilität bevorzugt.

Durch die Anwesenheit des Polyetheresteramids bzw. Polyetheramids wird die Polyamidformmasse weichgemacht und ist damit besser deformierbar, ohne dass das Rückstellverhalten leidet. Gegenüber der Verwendung niedermolekularer Weichmacher ist hier die Nichtextrahierbarkeit des polymeren Weichmachers von Vorteil, da die Schrumpfgefahr des Liners im Betrieb eliminiert wird, die dazu führen kann, dass der Liner die Wandreibung zum Trägerrohr verliert.

Die Polyamidformmasse kann die üblichen Zuschlagstoffe enthalten. Illustrative Beispiele hierfür sind Färbemittel, Flammverzögerer und -schutzmittel, Stabilisatoren, Füllstoffe, Gleitfähigkeitsverbesserer, Formentrennmittel, Schlagzähmodifikatoren, Weichmacher, Kristallisationsbeschleuniger, Antistatika, Schmiermittel, Verarbeitungshilfsmittel sowie weitere Polymere, die mit Polyamiden üblicherweise compoundiert werden.

### Beispiele dieser Zuschlagstoffe sind wie folgt:

Färbemittel: Titandioxid, Bleiweiß, Zinkweiß, Lithopone, Antimonweiß, Ruß, Eisenoxidschwarz, Manganschwarz, Kobaltschwarz, Antimonschwarz, Bleichromat, Mennige, Zinkgelb, Zinkgrün, Cadmiumrot, Kobaltblau, Berliner Blau, Ultramarin, Manganviolett, Cadmiumgelb, Schweinfurter Grün, Molybdänorange und -rot, Chromorange und -rot, Eisenoxidrot, Chromoxidgrün, Strontiumgelb, Molybdänblau, Kreide, Ocker, Umbra, Grünerde, Terra di Siena gebrannt, Graphit oder lösliche organische Farbstoffe.

Flammverzögerer und Flammschutzmittel: Antimontrioxid, Hexabromcyclododecan, Tetrachlor- oder Tetrabrombisphenol und halogenierte Phosphate, Borate, Chlorparaffine sowie roter Phosphor, ferner Stannate, Melamincyanurat und dessen Kondensationsprodukte wie Melam, Melem, Melon, Melaminverbindungen wie Melaminpyro- und -polyphosphat, Ammoniumpolyphosphat, Aluminiumhydroxid, Calciumhydroxid sowie phosphororganische Verbindungen, die keine Halogene enthalten wie beispielsweise Resorcinoldiphenylphosphat oder Phosphonsäureester.

Stabilisatoren: Metallsalze, insbesondere Kupfersalze und Molybdänsalze sowie Kupferkomplexe, Phosphite, sterisch gehinderte Phenole, sekundäre Amine, UV-Absorber und HALS-Stabilisatoren.

Füllstoffe: Glasfasern, Glaskugeln, Mahlglasfaser, Kieselgur, Talkum, Kaolin, Tone, CaF₂, Aluminiumoxide sowie Kohlefasern.

Gleitfähigkeitsverbesserer und Schmiermittel: MoS₂, Paraffine, Fettalkohole, Fettsäureamide sowie Stearate zwei- oder dreiwertiger Metalle.

Formentrennmittel und Verarbeitungshilfsstoffe: Wachse (Montanate), Montansäurewachse, Montanesterwachse, Polysiloxane, Polyvinylalkohol, SiO₂, Calciumsilikate sowie Perfluorpolyether.

Schlagzähmodifikatoren: Polybutadien, EPM, EPDM, HDPE, Acrylatkautschuk.

Antistatika: Ruß, Carbonfasern, Graphitfibrillen, mehrwertige Alkohole, Fettsäureester, Amine, Säureamide, quarternäre Ammoniumsalze.

Weitere Polymere: ABS, Polypropylen.

Diese Zuschlagstoffe können in den üblichen, dem Fachmann bekannten Mengen verwendet werden.

In einer bevorzugten Ausführungsform enthält die Polyamidformmasse 1 bis 25 Gew.-% Weichmacher, besonders bevorzugt 2 bis 18 Gew.-% und insbesondere bevorzugt 3 bis 15 Gew.-%.

Weichmacher und ihr Einsatz bei Polyamiden sind bekannt. Eine allgemeine Übersicht über Weichmacher, die für Polyamide geeignet sind, können Gächter/Müller, Kunststoffadditive, C. Hanser Verlag, 2. Ausgabe, Seite 296, entnommen werden.

Als Weichmacher geeignete, übliche Verbindungen sind z. B. Ester der p-Hydroxybenzoesäure mit 2 bis 20 C-Atomen in der Alkoholkomponente oder Amide von Arylsulfonsäuren mit 2 bis 12 C-Atomen in der Aminkomponente, bevorzugt Amide der Benzolsulfonsäure.

Als Weichmacher kommen u. a. p-Hydroxybenzoesäureethylester, p-Hydroxybenzoesäureoctylester, p-Hydroxybenzoesäure-i-hexadecylester, Toluolsulfonsäure-n-octylamid, Benzolsulfonsäure-n-butylamid oder Benzolsulfonsäure-2-ethylhexylamid infrage.

Der Inliner wird bevorzugt mittels eines Verfahrens hergestellt, bei dem das Polyamid der Formmasse durch Zusatz einer Verbindung mit mindestens zwei Carbonateinheiten in einem Mengenverhältnis von 0,005 bis 10 Gew.-%, bezogen auf das Polyamid, aufkondensiert wurde, wobei
a) eine Ausgangs-Polyamidformmasse bereitgestellt wurde,
b) eine Vormischung der Ausgangs-Polyamidformmasse und der Verbindung mit mindestens zwei Carbonateinheiten hergestellt wurde,
c) die Vormischung gegebenenfalls gelagert und/oder transportiert wurde und
d) die Vormischung anschließend zum Formteil verarbeitet wurde, wobei erst in diesem Schritt die Aufkondensation erfolgte.

Überraschenderweise wurde festgestellt, dass bei dieser Zugabeweise während der Verarbeitung eine signifikante Erhöhung der Schmelzesteifigkeit eintritt, bei gleichzeitig geringer Motorlast. Somit können trotz hoher Schmelzeviskosität hohe Durchsätze bei der Verarbeitung erzielt werden, woraus eine Verbesserung der Wirtschaftlichkeit des Herstellverfahrens resultiert.

Bevorzugt haben die hier verwendeten Ausgangspolyamide Molekulargewichte Mₙ von größer als 5000, insbesondere von größer als 8000. Hierbei werden Polyamide eingesetzt, deren Endgruppen zumindest teilweise als Aminogruppen vorliegen. Beispielsweise liegen mindestens 30 %, mindestens 40 %, mindestens 50 %, mindestens 60 %, mindestens 70 %, mindestens 80 % oder mindestens 90 % der Endgruppen als Aminoendgruppen vor. Die Herstellung von Polyamiden mit höherem Aminoendgruppengehalt unter Verwendung von Diaminen oder Polyaminen als Regler ist Stand der Technik. Im vorliegenden Fall wird bei der Herstellung des Polyamids bevorzugt ein aliphatisches, cycloaliphatisches oder araliphatisches Diamin mit 4 bis 44 C-Atomen als Regler eingesetzt. Geeignete Diamine sind beispielsweise Hexamethylendiamin, Decamethylendiamin, 2.2.4- bzw. 2.4.4-Trimethylhexamethylendiamin, Dodecamethylendiamin, 1.4-Diaminocyclohexan, 1.4-oder 1.3-Dimethylaminocyclohexan, 4.4'-Diaminodicyclohexylmethan, 4.4'-Diamino-3.3'-dimethyldicyclohexylmethan, 4.4'-Diaminodicyclohexylpropan, Isophorondiamin, Metaxylylendiamin oder Paraxylylendiamin.

In einer weiteren bevorzugten Ausführungsform wird bei der Herstellung des Polyamids ein Polyamin als Regler und gleichzeitig Verzweiger eingesetzt. Beispiele hierfür sind Diethylentriamin, 1.5-Diamino-3-(β-aminoethyl)pentan, Tris(2-aminoethyl)amin, N,N-Bis(2-aminoethyl)-N',N'bis[2-[bis(2-aminoethyl)amino]-ethyl]-1,2-ethandiamin, Dendrimere sowie Polyethylenimine, insbesondere verzweigte Polyethylenimine, die durch Polymerisation von Aziridinen erhältlich sind (Houben-Weyl, Methoden der Organischen Chemie, Band E20, Seiten 1482 bis 1487, Georg Thieme Verlag Stuttgart, 1987) und die in der Regel folgende Aminogruppenverteilung besitzen:
25 bis 46 % primäre Aminogruppen,
30 bis 45 % sekundäre Aminogruppen und
16 bis 40 % tertiäre Aminogruppen.

Im erfindungsgemäßen Verfahren wird mindestens eine Verbindung mit mindestens zwei Carbonateinheiten in einem Mengenverhältnis von 0,005 bis 10 Gew.-% eingesetzt, berechnet im Verhältnis zum eingesetzten Polyamid. Vorzugsweise liegt dieses Verhältnis im Bereich von 0,01 bis 5,0 Gew.-%, besonders bevorzugt im Bereich von 0,05 bis 3 Gew.-%. Der Begriff "Carbonat" bedeutet hier Ester der Kohlensäure insbesondere mit Phenolen oder Alkoholen.

Die Verbindung mit mindestens zwei Carbonateinheiten kann niedermolekular, oligomer oder polymer sein. Sie kann vollständig aus Carbonateinheiten bestehen oder sie kann noch weitere Einheiten aufweisen. Diese sind vorzugsweise Oligo- oder Polyamid-, -ester-, -ether-, -etheresteramid- oder -etheramideinheiten. Solche Verbindungen können durch bekannte Oligo- oder Polymerisationsverfahren bzw. durch polymeranaloge Umsetzungen hergestellt werden.

In einer bevorzugten Ausführungsform handelt es sich bei der Verbindung mit mindestens zwei Carbonateinheiten um ein Polycarbonat, beispielsweise auf Basis von Bisphenol A, bzw. um ein Blockcopolymeres, das einen derartigen Polycarbonatblock enthält.

Die Eindosierung der als Additiv verwendeten Verbindung mit mindestens zwei Carbonateinheiten in Form eines Masterbatches ermöglicht eine genauere Dosierung des Additivs, da größere Mengen verwendet werden. Es stellte sich zudem heraus, dass durch die Verwendung eines Masterbatches eine verbesserte Extrudatqualität erzielt wird. Das Masterbatch umfasst als Matrixmaterial bevorzugt das Polyamid, das auch im erfindungsgemäßen Verfahren aufkondensiert wird, oder ein damit verträgliches Polyamid, jedoch können auch unverträgliche Polyamide unter den Reaktionsbedingungen eine partielle Anbindung an das aufzukondensierende Polyamid erfahren, was eine Kompatibilisierung bewirkt. Das als Matrixmaterial im Masterbatch verwendete Polyamid hat bevorzugt ein Molekulargewicht Mₙ von größer als 5 000 und insbesondere von größer als 8 000. Hierbei können diejenigen Polyamide verwendet werden, deren Endgruppen überwiegend als Carbonsäuregruppen vorliegen.

Beispielsweise liegen mindestens 80 %, mindestens 90 % oder mindestens 95 % der Endgruppen als Säuregruppen vor.

Die Konzentration der Verbindung mit mindestens zwei Carbonateinheiten im Masterbatch beträgt vorzugsweise 0,15 bis 50 Gew.-%, besonders bevorzugt 0,2 bis 25 Gew.-% und insbesondere bevorzugt 0,3 bis 15 Gew.-%. Die Herstellung eines solchen Masterbatches erfolgt in der üblichen, dem Fachmann bekannten Weise.

Geeignete Verbindungen mit mindestens zwei Carbonateinheiten sowie geeignete Masterbatches sind in der WO 00/66650, auf die hier ausdrücklich Bezug genommen wird, ausführlich beschrieben.

Ein auf diesem Prinzip beruhendes Additiv zur Molekulargewichtseinstellung bei Polyamiden wird von der Fa. Brüggemann KG unter der Bezeichnung Brüggolen M1251 vertrieben. Primäre Anwendungen liegen im Bereich der Viskositätseinstellung für Recyclat aus PA6 oder PA66, das in Extrusionsformmassen wiederverwertet wird. Bei dem Additiv Brüggolen M1251 handelt es sich um ein Masterbatch eines niedrigviskosen Polycarbonats, beispielsweise Lexan 141, in einem säureterminierten PA6. Für den Molekulargewichtsaufbau ist eine Reaktion der im aufzukondensierenden Material enthaltenen Aminoendgruppen mit dem Polycarbonat ursächlich.

Die Wirksamkeit der Methode wird in der WO 00/66650 am Beispiel der Aufkondensierung von PA6 und PA66 gezeigt, wobei die entsprechenden Polykondensate teilweise in reiner Form eingesetzt werden, teilweise aber auch Zuschlagstoffe enthalten.

Die Erfindung ist anwendbar bei Polyamiden, die herstellungsbedingt mindestens 5 ppm Phosphor in Form einer sauren Verbindung enthalten. In diesem Fall wird der Polyamidformmasse vor der Compoundierung oder bei der Compoundierung 0,001 bis 10 Gew.-%, bezogen auf das Polyamid, eines Salzes einer schwachen Säure zugegeben. Geeignete Salze sind in der DE-A 103 37 707 offenbart, auf die hiermit ausdrücklich Bezug genommen wird.

Die Erfindung ist jedoch genauso gut anwendbar bei Polyamiden, die herstellungsbedingt weniger als 5 ppm Phosphor oder gar keinen Phosphor in Form einer sauren Verbindung enthalten. In diesem Fall kann zwar, muss aber nicht ein entsprechendes Salz einer schwachen Säure zugegeben werden.

Die Verbindung mit mindestens zwei Carbonateinheiten wird als solche oder als Masterbatch erfindungsgemäß erst nach der Compoundierung, aber spätestens während der Verarbeitung zugegeben. Bevorzugt mischt man bei der Verarbeitung das aufzukondensierende Polyamid bzw. die aufzukondensierende Polyamidformmasse als Granulat mit dem Granulat der Verbindung mit mindestens zwei Carbonateinheiten oder dem entsprechenden Masterbatch. Es kann aber auch eine Granulatmischung der fertig compoundierten Polyamidformmasse mit der Verbindung mit mindestens zwei Carbonateinheiten bzw. dem Masterbatch hergestellt, anschließend transportiert oder gelagert und danach verarbeitet werden. Entsprechend kann natürlich auch mit Pulvermischungen verfahren werden. Entscheidend ist, dass die Mischung erst bei der Verarbeitung aufgeschmolzen wird. Eine gründliche Vermischung der Schmelze bei der Verarbeitung ist empfehlenswert. Das Masterbatch kann genauso gut jedoch auch als Schmelzestrom mit Hilfe eines beigestellten Extruders in die Schmelze der zu verarbeitenden Polyamidformmasse zudosiert und dann gründlich eingemischt werden.

Das Verfahren zur Herstellung des Inliners ist in allgemeiner Form in der EP 1 690 889 A1 und der EP 1 690 890 A1 beschrieben.

Die Wandung des Inliners kann entweder einschichtig sein und in diesem Fall vollständig aus der Polyamidformmasse bestehen, sie kann aber auch mehrschichtig sein, wobei die Polyamidformmasse die Außenschicht, die Innenschicht und/oder die Mittelschicht bilden kann. Die andere Schicht bzw. die anderen Schichten bestehen aus Formmassen auf Basis anderer Polymerer, beispielsweise von Polyethylen, Polypropylen oder Fluorpolymeren. Derartige Mehrschichtstrukturen können gemäß dem Stand der Technik unter anderem durch Coextrusion hergestellt werden.

In einer bevorzugten Ausführungsform ist der Inliner antielektrostatisch ausgerüstet, damit durch Friktion mit dem transportierten Medium entstandene statische Aufladung abgeführt werden kann. Im einfachsten Fall handelt es sich um einen elektrisch leitfähigen Streifen aus Metall oder aus einer leitfähigen Formmasse, der entweder axial oder spiralig angeordnet ist. Besser ist es, in vorzugsweise regelmäßigem Abstand zueinander mehrere derartige Streifen vorzusehen, beispielsweise zwei, drei, vier, fünf, sechs, sieben, acht, neun, zehn, elf oder zwölf. Alternativ hierzu besteht eine Schicht des Inliners, vorzugsweise die innerste Schicht, aus einer elektrisch leitfähigen Formmasse. Die Leitfähigkeit wird durch Zusatz von Metallfasern, Carbonfasern, metallisierten Carbonfasern, Graphitfasern und vorzugsweise von Leitfähigkeitsruß und/oder Graphitfibrillen erzeugt. Vorzugsweise handelt es sich auch hier um eine Polyamidformmasse, die mindestens 50 % Polyamid enthält, das nicht PA11 ist.

Die fragliche Rohrleitung kann eine Transportleitung, eine Verteilungsleitung oder eine Hausanschlussleitung sein und entweder als Druckleitung oder als Freispiegelleitung ausgeführt sein. Sie dient beispielsweise dem Transport von Fernwärme, Frischwasser, Abwasser, Gas, Ölen wie beispielsweise Rohöl, Leichtöl oder Schweröl, Kraftstoffen wie beispielsweise Kerosin oder Diesel, Petrochemikalien, Sole, Laugen, abrasiven Medien oder Stäuben und kann beispielsweise eine Ver- oder Entsorgungsleitung sein. Sie ist vorzugsweise im Erdreich, in Tunneln oder Stollen oder im Wasser, unter Umständen aber auch oberirdisch verlegt.

Im Rahmen der Erfindung kann das Rohr bereits werksseitig oder beim Verlegen mit dem Inliner ausgestattet werden, um die Standzeiten im Betrieb zu verlängern. In den meisten Fällen wird der Inlinerjedoch nachträglich in die Rohrleitung eingebracht, um sie zu sanieren; man spricht hier von Relining.

Die in Frage kommenden Rohrleitungen haben in der Regel einen Innendurchmesser von bis zu 2 000 mm, vorzugsweise bis zu 1 000 mm und besonders bevorzugt bis zu 500 mm.

Mit Hilfe der Erfindung lässt sich eine sehr langlebige Sanierung bzw. Versiegelung einer Rohrleitung erzielen.

Im Folgenden soll das erfindungsgemäße Verfahren beispielhaft erläutert werden. In den Versuchen wurden folgende Materialien eingesetzt:
- Amingeregeltes PA12: mit 50 mäq/kg NH₂-Gruppen und 9 mäq/kg COOH-Gruppen, ηᵣₑₗ ca. 2,15.
- Säuregeregeltes PA12: mit 8 mäq/kg NH₂-Gruppen und 50 mäq/kg COOH-Gruppen, ηᵣₑₗ ca. 2,15.
- Brüggolen^{®} M1251,: eine Mischung aus einem niederviskosen Polycarbonat und einem säureterminierten PA6.
- Ceasit^{®} PC: Calciumstearat.
- PA12: VESTAMID^{®} 2140, ein handelsüblicher PA12-Extrusionstyp der Anmelderin.
- PA1010: ein aus 1,10-Decandiamin und Sebacinsäure auf bekannte Weise hergestelltes Homopolyamid mit einer relativen Lösungsviskosität ηᵣₑₗ, bestimmt gemäß DIN EN ISO 307, von 2,1.
- HDPE: ein handelsüblicher Rohrextrusionstyp.
- PA11: ein handelsüblicher Typ der Fa. Arkema (RILSAN^{®} BESNO).

Zunächst wurden folgende Abmischungen in der Schmelze hergestellt, extrudiert und granuliert:

| | **Batch 1** | **Batch 2** |
|---|---|---|
| Amingeregeltes PA12 [Gew.-%] | 99,9 | 0 |
| Säuregeregeltes PA12 [Gew.-%] | 0 | 98,4 |
| Brüggolen M1251 [Gew.-%] | 0 | 1,5 |
| Ceasit PC [Gew.-%] | 0,1 | 0,1 |
| Durchsatz [kg/h] | 10 | 10 |
| Schneckendrehzahl [1/min] | 250 | 250 |
| Schmelzetemperatur [°C] | 249 | 251 |
| ηᵣₑₗ gemäß DIN EN ISO 307 | 2,10 | 2,12 |

Gemäß folgender Rezeptur wurde ein als "PA12/Brüggolen" bezeichneter hochmolekularer PA12-Typ auf einem 50er Reifenhäuser Einschneckenextruder mit Dreizonenschnecke (L = 25 D) hergestellt, extrudiert und granuliert:

| | **PA12/Brüggolen** |
|---|---|
| Batch 1 [Gew.-%] | 60 |
| Batch 2 [Gew.-%] | 40 |
| Schmelzetemperatur [°C] | 250 |

Aus den Polyamiden wurden gemäß Tabelle 1 Compounds hergestellt:

**Tabelle 1: Herstellung der Compounds**

| | Vergleichsbeispiel 1 | Beispiel 1 | Beispiel 2 | Beispiel 3 |
|---|---|---|---|---|
| PA11 | 87,5 | | | |
| PA12 | | 87,5 | | |
| PA12/Brüggolen | | | 87,5 | |
| PA 1010 | | | | 87,5 |
| Weichmacher | 12 | 12 | 12 | 12 |
| Stabilisator | 0,5 | 0,5 | 0,5 | 0,5 |
| Lösungsviskosität ηᵣₑₗ gemäß DIN EN ISO 307 | 2,1 | 2,1 | 2,5 | 2,1 |

Das Rückstellverhalten wurde mittels eines Kompressionsversuches mit anschließender Aufzeichnung des Rückstellverhaltens an den entsprechenden Formmassen ermittelt. Die Prüfkörper wurden aus spritzgegossenen Platten der Abmaße 110 x 150 x 6 mm mittels Fräse präpariert. An den so gewonnenen Prüfkörpern der Maße 10 x 10 x 6 mm wurde anschließend ein Kompressionsversuch mit anschließender Rückstellungsmessung über 24 Stunden durchgeführt.

Die Probekörper wurden zunächst um 20, 25 und 30 % der ursprünglichen Probendicke gestaucht. Nach Erreichen der Endstauchung wurde die Kraft auf Null reduziert und der Rückstellweg kontinuierlich über 250 Sekunden aufgezeichnet. Anschließend wurde die Probendicke nach 1 Stunde und nach 24 Stunden erneut vermessen.

**Tabelle 2: Prüfergebnisse bei 20 % Stauchung**

| Verbleibende Stauchung in % | Vergleich 1 | Vergleich 2 (HDPE) | Beispiel 1 | Beispiel 2 | Beispiel 3 |
|---|---|---|---|---|---|
| Nach 250 sec | 2,8 | 8,3 | 5,2 | 5,8 | 5,4 |
| Nach 1 h | 2,4 | 5,8 | 5,0 | 5,3 | 5,1 |
| Nach 24 h | 2,0 | 4,8 | 4,8 | 4,8 | 4,7 |

**Tabelle 3: Prüfergebnisse bei 25 % Stauchung**

| Verbleibende Stauchung in % | Vergleich 1 | Vergleich 2 (HDPE) | Beispiel 1 | Beispiel 2 | Beispiel 3 |
|---|---|---|---|---|---|
| Nach 250 sec | 4,5 | 11,2 | 7,7 | 8,5 | 8,1 |
| Nach 1 h | 4,1 | 10,5 | 7,3 | 7,9 | 7,7 |
| Nach 24 h | 3,4 | 7,5 | 7,1 | 7,1 | 7,2 |

**Tabelle 4: Prüfergebnisse bei 30 % Stauchung**

| Verbleibende Stauchung in % | Vergleich 1 | Vergleich 2 (HDPE) | Beispiel 1 | Beispiel 2 | Beispiel 3 |
|---|---|---|---|---|---|
| Nach 250 sec | 6,2 | 14,1 | 10,2 | 11,5 | 11,2 |
| Nach 1 h | 5,6 | 12,2 | 9,7 | 10,2 | 10,0 |
| Nach 24 h | 4,9 | 10,5 | 9,3 | 9,7 | 9,5 |

Der Vergleich der Resultate zeigt, dass die geprüften Polyamid-Formmassen auf Basis von PA12 und PA1010 ein deutlich langsameres Rückstellverhalten als eine vergleichbare PA11-Formmasse aufweisen. Es stellte sich sogar heraus, dass das Rückstellverhalten sehr stark dem des Polyethylen ähnelt. Analoge Ergebnisse wurden mit PA1212, PA613, PA1014, PA610, PA1012 und PA612 erhalten.

## Patentansprüche

1. Verfahren zum Einbringen eines Inliners in ein Rohr oder eine Rohrleitung, wobei der Außendurchmesser des Inliners größer ist als der Innendurchmesser des Rohrs bzw. der Rohrleitung, und wobei der Querschnitt des Inliners durch Einwirken einer äußeren Kraft vor dem Einbringen verringert wird,
**dadurch gekennzeichnet,**
- **dass** der Inliner aus einer Polyamidformmasse besteht, die mindestens 50 Gew.-% Polyamid enthält, das ausgewählt ist aus der Gruppe PA610, PA612, PA613, PA1010, PA1012, PA1014, PA12, PA1212 sowie darauf basierende Polyetheresteramide und Polyetheramide,
- **dass** der Querschnitt des Inliners um mindestens 3 % reduziert wird und
- **dass** der Außendurchmesser des Inliners maximal 10 % größer ist als der Innendurchmesser des Rohrs beziehungsweise der Rohrleitung.

2. Verfahren gemäß Anspruch 1,
**dadurch gekennzeichnet,**
**dass** das Polyamid der Polyamidformmasse zu 1 bis 70 Gew.-% aus Polyetheresteramid und/oder Polyetheramid besteht.

3. Verfahren gemäß einem der vorhergehenden Ansprüche,
**dadurch gekennzeichnet,**
**dass** die Polyamidformmasse 1 bis 25 Gew.-% Weichmacher enthält.

4. Verfahren gemäß einem der vorhergehenden Ansprüche,
**dadurch gekennzeichnet,**
**dass** der Inliner mittels eines Verfahrens hergestellt wurde, bei dem das Polyamid der Formmasse durch Zusatz einer Verbindung mit mindestens zwei Carbonateinheiten in einem Mengenverhältnis von 0,005 bis 10 Gew.-%, bezogen auf das Polyamid, aufkondensiert wurde, wobei
a) eine Ausgangs-Polyamidformmasse bereitgestellt wurde,
b) eine Vermischung der Ausgangs-Polyamidformmasse und der Verbindung mit mindestens zwei Carbonateinheiten hergestellt wurde,
c) die Vormischung gegebenenfalls gelagert und/oder transportiert wurde und
d) die Vormischung anschließend zum Formteil verarbeitet wurde, wobei erst in diesem Schritt die Aufkondensation erfolgte.

## Claims

1. A method for the introduction of an inliner into a pipe or a pipeline, where the external diameter of the inliner is greater than the internal diameter of the pipe or of the pipeline, and where the action of an external force is used to reduce the cross section of the inliner prior to introduction,
**characterized in that**
- the inliner is composed of a polyamide moulding composition which comprises at least 50% by weight of polyamide which is selected from the group of PA610, PA612, PA613, PA1010, PA1012, PA1014, PA12, PA1212, and also materials based thereon which are polyetheresteramides or which are polyetheramides,
- the cross section of the inliner is reduced by at least 3% and
- the external diameter of the inliner is at most 10% greater than the internal diameter of the pipe or of the pipeline.

2. A method according to claim 1,
**characterized in that**
the polyamide of the polyamide moulding composition is composed of from 1 to 70% by weight of polyetheresteramide and/or polyetheramide.

3. A method according to any one of the preceding claims,
**characterized in that**
the polyamide moulding composition comprises from 1 to 25% by weight of plasticizer.

4. A method according to any one of the preceding claims,
**characterized in that**
the inliner was produced by a method in which the polyamide of the moulding composition was condensed to give a higher molecular weight through addition of a compound having at least two carbonate units in a quantitative ratio of from 0.005 to 10% by weight, based on the polyamide, where
a) a starting polyamide moulding composition was provided,
b) a mixture of the starting polyamide composition and of the compound having at least two carbonate units was prepared,
c) the premix was, if appropriate, stored and/or transported, and
d) the premix was then processed to give the moulding, and the condensation to give a higher molecular weight took place in this step and not before.

## Revendications

1. Procédé pour insérer un revêtement intérieur dans une tube ou une canalisation, le diamètre extérieur du revêtement intérieur étant plus grand que le diamètre intérieur du tube ou de la canalisation, et la section transversale du revêtement intérieur étant, avant l'insertion, diminuée sous l'action d'une force extérieure,
**caractérisé en ce que**
- le revêtement intérieur est constitué d'un mélange à mouler de polyamide, qui contient au moins 50 % en poids d'un polyamide qui est choisi dans le groupe consistant en PA610, PA612, PA613, PA1010, PA1012, PA1014, PA12, PA1212, ainsi qu'en les polyétheresteramides et polyétheramides à base de ces derniers,
- la section transversale du revêtement intérieur subit une réduction d'au moins 3 %, et
- le diamètre extérieur du revêtement intérieur est d'au plus 10 % plus grand que le diamètre intérieur du tube ou de la canalisation.

2. Procédé selon la revendication 1, **caractérisé en ce que** le polyamide du mélange à mouler de polyamide est à raison de 1 à 70 % en poids constitué de polyétheresteramides et/ou de polyétheramides.

3. Procédé selon l'une des revendications précédentes, **caractérisé en ce que** le mélange à mouler de polyamide contient 1 à 25 % en poids d'un plastifiant.

4. Procédé selon l'une des revendications précédentes, **caractérisé en ce que** le revêtement intérieur a été fabriqué par un procédé dans lequel le polyamide du mélange à mouler a été condensé par addition d'un composé ayant au moins deux unités carbonate selon un rapport pondéral de 0,005 à 10 % en poids par rapport au polyamide,
ce à l'occasion de quoi
a) un mélange à mouler de polyamide de départ a été mis à disposition,
b) un mélange du mélange à mouler de polyamide de départ et du composé ayant au moins deux unités carbonates a été fabriqué,
c) le prémélange a été éventuellement stocké et/ou transporté, et
d) le prémélange a été ensuite mis en oeuvre pour donner la pièce moulée, la condensation n'ayant eu lieu qu'au cours de cette étape.
